# EUROPEAN PATENT APPLICATION

(11) **EP 2 204 953 A1**
(43) Date of publication of application: **07.07.2010**
(21) Application number: 09180877.4
(22) Date of filing: 29.12.2009
(51) Int. Cl.: H04L 12/56

(54) **Method, apparatus and system for realizing dynamic correlation of control plane traffic rate**

(30) Priority: 30.12.2008 CN 200810242168; 06.08.2009 WO PCT/CN2009/073127
(71) Applicant: Huawei Technologies Co., Ltd., Longgang District, Shenzhen Guangdong 518129 (CN)
(72) Inventor: Pan, Yongbo, Hai-Dian District Beijing (CN)
(74) Representative: Thun, Clemens

(57) **Abstract**

The present invention relates to the field of communications, and more particularly to a method, an apparatus and a system for realizing dynamic correlation of control plane traffic rate. The method includes: receiving a punted-to-control-plane bandwidth rate value currently required by at least one protocol, the control plane traffic bandwidth rate value currently required by the at least one protocol being obtained from current status information of the at least one protocol; and assigning a bandwidth for the at least one protocol in accordance with the punted-to-control-plane bandwidth rate value currently required by the at least one protocol. The method ensures that the bandwidth assigned by the forwarding engine module for each protocol conforms to the practical circumstance of the protocol, and makes it possible that normal operation of the protocol is not only satisfied, but the bandwidth of the CPU channel is also not wasted due to excessive assignment.

## Description

The present application claims priority to Chinese patent application No. 200810242168.8, and filed on December 30, 2008, and International Application No. PCT/CN2009/073127, filed on August 6, 2009, which claims priority to Chinese Patent Application No. 200810242168.8; both of which are hereby incorporated by reference in their entireties.

### Field of the Invention

The present invention relates to the field of communications, and more particularly to a method, an apparatus and a system for realizing dynamic correlation of control plane traffic rate.

### Background

With the development of the Internet, the networking environment has become increasingly complicated, network and virus attacks are increasingly frequent, and the harm attacks on network devices is increasingly severe. In the Denial of Service (DOS) attack, the attacker uses a great quantity of data packages or malformed packets to incessantly initiate accesses or request responses to a network device in a very short period of time, whereby the server is incapacitated from processing authorized tasks due to overload, thereby leading to abnormal services of the network device.

Responsible for processing variously up transmitted protocol packages, managing packages, calculating routes and updating lists and items, the central processing unit (CPU) of the network device is the core of the network device. However, due to the limited processing capability of the CPU, namely limited rate at which punted-to-control-plane package traffic is processed, if there is a DOS attack aimed at the CPU of the network device, the punted-to-control-plane packets traffic will exceed the processing capability of the CPU, and this may lead to service interruption as normal packages are not processed by the CPU in slight cases, and in more severe cases, to CPU failure and hence overall failure.

Currently, traffic control function is usually employed to protect against DOS attack on the CPU of the network device. Various protocols allow the traffic rate up-transmitted to CPU to be determined by a command line or by a default value, and the punted-to-control-plane traffic rate is limited for various protocols by the committed access rate (CAR) mechanism.

The mode of default value plus configuration value is currently in common use to determine the magnitude of punted-to-control-plane traffic rates allowed by various protocols, whereby if a user has configured the bandwidth of a certain protocol by the command line, the configuration value is used; otherwise, a set of default values at initialization is used to determine the bandwidth rate value of the protocol.

However, in the application of the current network, with variations in such parameter values as number of peer, network topology and protocol configuration, the bandwidth rate values required by various protocol packages are different at different times, so that when the bandwidth rate value required by a certain protocol during the process of operation is greater than the default value, it is necessary to adjust the bandwidth rate value by the command line to ensure the punted-to-control-plane protocol packages, and the process is very cumbersome. If the bandwidth rate value of a certain protocol is configured is unduly great, the bandwidth of the CPU channel may be wasted, and other protocols with great traffics to be transmitted cannot be processed by the CPU, thus affecting normal services of other protocols.

### Summary of the Invention

Embodiments of the present invention provide a method, an apparatus and a system for realizing dynamic correlation of control plane traffic rate to solve the problem existent in the current communication networks in which punted-to-control-plane traffics of various protocols cannot be flexibly restricted.

One embodiment of the present invention proposed to solve the aforementioned technical problem is to provide a method for dynamic correlation of control plane traffic rate, which method comprises receiving a punted-to-control-plane bandwidth rate value currently required by at least one protocol, the punted-to-control-plane bandwidth rate value currently required by the at least one protocol being obtained from current status information of the at least one protocol; and assigning a bandwidth for the at least one protocol in accordance with the punted-to-control-plane bandwidth rate value currently required by the at least one protocol.

Another embodiment of the present invention proposed to solve the aforementioned technical problem is to provide a system for realizing dynamic correlation of control plane traffic rate, which system comprises a protocol information acquiring module and a forwarding engine module, of which the protocol information acquiring module acquires a punted-to-control-plane rate value currently required by at least one protocol in accordance with current status information of the at least one protocol, and sends the acquired punted-to-control-plane rate value currently required by the at least one protocol to the forwarding engine module; and the forwarding engine module assigns a bandwidth for the at least one protocol in accordance with the punted-to-control-plane rate value currently required by the at least one protocol.

Embodiments of the present invention put in correlation the protocol information acquiring module, the service processing module and the forwarding engine module, to dynamically acquire the punted-to-control-plane bandwidth rate value currently required by at least one protocol in accordance with the information of the at least one protocol, and to send down the punted-to-control-plane bandwidth rate value currently required by the at least one protocol to the forwarding engine module; the forwarding engine module assigns a bandwidth for the at least one protocol in accordance with the punted-to-control-plane bandwidth rate value currently required by the at least one protocol, to thereby ensure that the bandwidth assigned by the forwarding engine module for each protocol conforms to the practical circumstance of the protocol, and to make it possible that normal operation of the protocol is not only satisfied, but the bandwidth of the CPU channel is also not wasted due to excessive assignment.

### Brief Description of the Drawings

To make apparent the technical solutions of the embodiments of the present invention or of the related art, drawings necessary for illustration of the embodiments or the related art are briefly presented below. Obviously, the drawings as described below are merely directed to certain embodiments of the present invention, and it is possible for a person ordinarily skilled in the art to obtain other drawings based on these drawings without creative effort.
Fig. 1 is a schematic view illustrating the structure of a system for realizing dynamic correlation of control plane traffic rate according to an embodiment of the present invention;
Fig. 2 is a schematic view illustrating a method for realizing correlation of control plane traffic rate according to an embodiment of the present invention;
Fig. 3 is a schematic view illustrating a method for punting a package to the control plane, by the forwarding engine module according to an embodiment of the present invention;
Fig. 4 is a schematic view illustrating the configuration of the system for realizing dynamic correlation of control plane traffic rate according to another embodiment of the present invention; and
Fig. 5 is a flowchart illustrating a method for realizing correlation of control plane traffic rate according to another embodiment of the present invention.

### Detailed Description of the Invention

In order for a person skilled in the art to better comprehend the contents of the present invention, the present invention is described in greater detail below with reference to the drawings and embodiments. Obviously, the embodiments herein described are only partial, rather than entire, embodiments of the present invention. All other embodiments obtained by a person ordinarily skilled in the art, on the basis of the embodiments in the present invention and without spending creative effort, fall within the protection scope of the present invention.

The process of realizing embodiments of the present invention is described below with reference to the embodiments.

One embodiment of the present invention provides a method for dynamic correlation of control plane traffic rate. The method includes: receiving an punted-to-control-plane bandwidth rate value currently required by at least one protocol delivered by a service processing module, the punted-to-control-plane bandwidth rate value currently required by the at least one protocol being obtained from current status information of the at least one protocol; and updating a parameter value of committed access rate (CAR) to which the at least one protocol corresponds according to the punted-to-control-plane bandwidth rate value currently required by the at least one protocol.

Another embodiment of the present invention provides a system for realizing dynamic correlation of control plane traffic rate. The system includes a service processing module and a device for realizing dynamic correlation of control plane traffic rate; the device for realizing dynamic correlation of control plane traffic rate includes a protocol information acquiring module and a forwarding engine module, wherein the protocol information acquiring module is configured to acquire an punted-to-control-plane bandwidth rate value currently required by at least one protocol according to current status information of the at least one protocol, and transmit the acquired punted-to-control-plane bandwidth rate value currently required by the at least one protocol to the forwarding engine module; and the forwarding engine module is configured to assign a bandwidth for the at least one protocol according to the punted-to-control-plane bandwidth rate value currently required by the at least one protocol.

According to the embodiment of the present invention, the protocol information acquiring module, the service processing module and the forwarding engine module are put in correlation, thus the required punted-to-control-plane bandwidth rate value according to the information of each protocol in the service processing module may be dynamically acquired, and the acquired required punted-to-control-plane bandwidth rate value may be transmitted to the forwarding engine module; the forwarding engine module may assign a bandwidth for each protocol according to the required punted-to-control-plane bandwidth rate value, so that the bandwidth assigned by the forwarding engine module for each protocol is conform to the practical circumstance of the protocol, and normal operation of the protocol may be ensured, the bandwidth of the CPU channel may not be wasted due to excessive assignment.

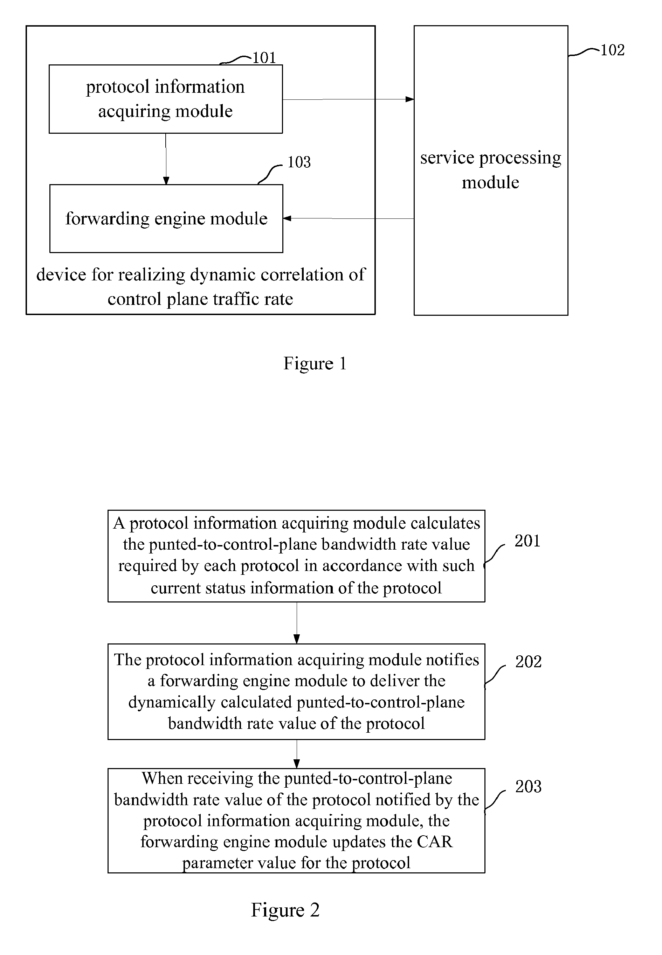

Refer to Fig. 1, which is a schematic view illustrating the system for realizing dynamic correlation of control plane traffic rate according to an embodiment of the present invention. The system for realizing dynamic correlation of control plane traffic rate includes a device for realizing dynamic correlation of control plane traffic rate and a service processing module 102. The device for realizing dynamic correlation of control plane traffic rate includes a protocol information acquiring module 101 and a forwarding engine module 103. The protocol information acquiring module 101 is configured to dynamically acquire the currently required punted-to-control-plane bandwidth rate value according to the information of each protocol in the service processing module 102, and transmit the acquired required punted-to-control-plane bandwidth rate value to the forwarding engine module 103; the forwarding engine module 103 is configured to assign a bandwidth for each protocol according to the required control plane traffic bandwidth rate value, so that the bandwidth assigned by the forwarding engine module for each protocol may be conform to the practical circumstance of the protocol, and normal operation of the protocol may be satisfied, the bandwidth of the CPU channel may not be wasted due to excessive assignment.

Fig. 2 is a schematic view illustrating the method for realizing correlation of control plane traffic rate according to an embodiment of the present invention. The method includes the following steps:
201: A protocol information acquiring module calculates the punted-to-control-plane bandwidth rate value required by each protocol in accordance with such current status information of the protocol. The current status information may include one or more of: the number of peer, the size of the protocol package, and the transmission time interval of the protocol package. For instance, a protocol requires a punted-to-control-plane bandwidth of 1M at time t1, and at time t2 the number of peer is doubled as the original number while the configuration of the protocol remains invariant, the punted-to-control-plane bandwidth required by this protocol will be 2M at time t2. It is dynamic, that is to say, when there is a change in the protocol status, for instance when the number of peer of a protocol is increased, the protocol information acquiring module recalculates the punted-to-control-plane bandwidth rate value required by the protocol on finding of the change, and the process enters step 202 for processing therein.
202: The protocol information acquiring module notifies a forwarding engine module to deliver the dynamically calculated punted-to-control-plane bandwidth rate value of the protocol; the process goes to step 203.
203: When receiving the punted-to-control-plane bandwidth rate value of the protocol notified by the protocol information acquiring module, the forwarding engine module updates the CAR parameter value for the protocol; for instance, since the number of peer has been increased to be double as the original number while the configuration of a protocol remains invariant at time t2, it is also necessary to change the required punted-to-control-plane bandwidth rate value to be double as the original value, namely to 2M, so that the CAR parameter to which the protocol corresponds should be set as 2M at time t2. This ensures that the forwarding engine module restricts the rate value of each protocol to be consistent with the service processing layer.

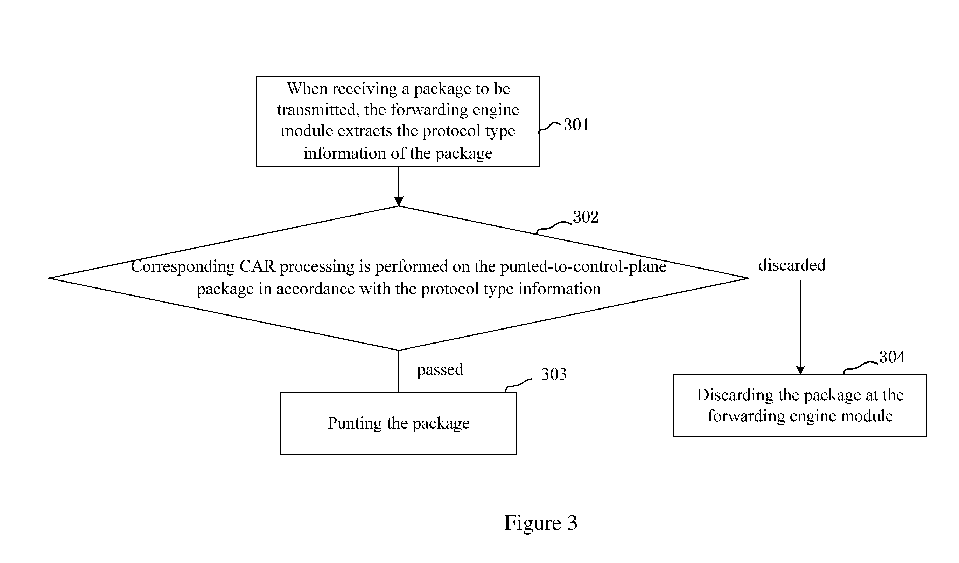

Fig. 3 is a schematic view illustrating a method for transmitting a package by the forwarding engine module. The method includes the following steps:
301: When receiving a package to be transmitted, the forwarding engine module extracts the protocol type information of the package. The protocol type information is the information capable of being used to determine the protocol type, for instance, the protocol type information may be IP header protocol type, TCP header port number, or UDP header port number. For example, a BGP protocol package may employ TCP, and the TCP port number may be 179. Accordingly, it is possible to extract the protocol package information to determine whether it is TCP, and whether the port number is 179; if yes, the package is a BGP package; if not, the package is determined whether it is another package type.
302: Corresponding CAR processing is performed on the punted-to-control-plane package in accordance with the protocol type information, namely to determine whether to up transmit the package in accordance with the CAR parameter value of the protocol. CAR parameter values of various protocols are obtained by the service processing module and the forwarding engine module working in correlation. For example, if the punted-to-control-plane bandwidth required by a protocol at time t1 is 1M in step 201, the punted-to-control-plane bandwidth required at time t2 will be 2M.
303: If the result of CAR processing on the protocol package in accordance with the CAR parameter of the protocol is to allow passage of the protocol package, the protocol package is punted to the CPU for processing therein.
304: If the result of CAR processing on the protocol package in accordance with the CAR parameter of the protocol is not to allow passage of the protocol package, this protocol package may be discarded at the forwarding engine module.

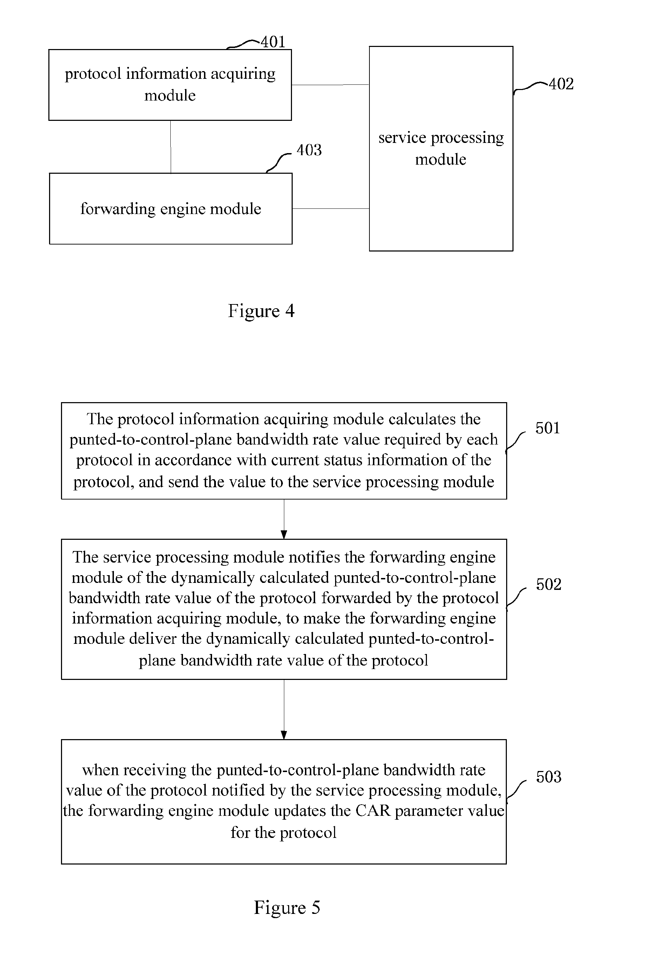

Still another embodiment of the present invention provides a system for dynamic correlation of control plane traffic rate; as shown in Fig. 4, the system includes a protocol information acquiring module 401, a service processing module 402 and a forwarding engine module 403, wherein
the protocol information acquiring module 401, is configured to dynamically acquire an punted-to-control-plane bandwidth rate value of at least one protocol in accordance with information of the at least one protocol, and transmit the acquired punted-to-control-plane bandwidth rate value of the at least one protocol to the service processing module 402;
the service processing module 402, is configured to receive the punted-to-control-plane bandwidth rate value of the at least one protocol acquired by the protocol information acquiring module 401, and deliver the acquired punted-to-control-plane bandwidth rate value of the at least one protocol to the forwarding engine module 403; and
the forwarding engine module 403, is configured to receive the punted-to-control-plane bandwidth rate value of the at least one protocol from the service processing module 402, and assign a bandwidth for the at least one protocol in accordance with the punted-to-control-plane bandwidth rate value of the at least one protocol.

Yet another embodiment of the present invention provides a method for dynamic correlation of control plane traffic rate; as shown in Fig. 5, the method includes the following steps:
501: The protocol information acquiring module calculates the punted-to-control-plane bandwidth rate value required by each protocol in accordance with current status information of the protocol, current status information of the protocol includes one or more of: the number of peer, the size of the protocol package, and the transmission time interval of the protocol package; and send the value to the service processing module. For instance, a protocol requires a punted-to-control-plane bandwidth of 1M at time t1, and then at time t2 the number of peer is increased to double as the original number while the configuration of the protocol remains invariant, the punted-to-control-plane bandwidth required by this protocol will be 2M at time t2. It is dynamic, that is to say, when there is a change in the protocol status, for instance when the number of peer of a protocol is increased, the protocol information acquiring module recalculates the punted-to-control-plane bandwidth rate value required by the protocol on finding of the change, and the process enters step 502 for processing therein.
502: The service processing module notifies the forwarding engine module of the dynamically calculated punted-to-control-plane bandwidth rate value of the protocol forwarded by the protocol information acquiring module, to make the forwarding engine module deliver the dynamically calculated punted-to-control-plane bandwidth rate value of the protocol; the process goes to step 503.
503: when receiving the punted-to-control-plane bandwidth rate value of the protocol notified by the service processing module, the forwarding engine module updates the CAR parameter value for the protocol. For example, since the number of peer is increased to be double as the original number while the configuration of a protocol remains invariant at time t2 in step 501, it is also necessary to change the required punted-to-control-plane bandwidth rate value to be double as the original value, namely to 2M, so that the CAR parameter to which the protocol corresponds should be set as 2M at time t2. This ensures that the forwarding engine module restricts the rate value of each protocol to be consistent with the service processing layer.

By control plane traffic rate correlation of the protocol information acquiring module, the service processing module and the forwarding engine module, the embodiments of the present invention ensures that the punted-to-control-plane bandwidth rate value assigned by the forwarding engine for each protocol is required by each protocol, and the bandwidth of the CPU channel is saved at the same time. Since the control plane traffic rate correlation of the service processing module and the forwarding engine module is dynamically performed, it is ensured that the requirement of each protocol can be satisfied at any time, and the bandwidth of the CPU channel is saved at the same time.

As can be clearly known to persons skilled in the art from the above descriptions of the embodiments, the present invention can be carried out with the aid of software with the indispensable general hardware platform, and can of course be carried out alone by hardware, but the former mode is preferred in many instances. Based on such understanding, the technical solution of the present invention or the part of the invention that makes contribution to the state of the art can be essentially embodied in the form of a software product. Such a computer software product is stored in a storage medium and includes a multiplicity of instructions enabling a computer device (which can be a personal computer, a server, or a network device, and so on) to execute the methods as recited in the various embodiments of the present invention.

The above are directed merely to preferred embodiments of the present invention, but the protection scope of the present invention is not limited thereto. Any modifications or substitutions easily conceivable to those skilled in the art within the technical scope as disclosed in the present invention and without departing from the technical principle of the present invention should all be covered in the protection scope of the present invention. As such, the protection scope of the present invention should be based on the attached claims.

## Claims

1. A method for dynamic correlation of control plane traffic rate, comprising:
receiving a punted-to-control-plane bandwidth rate value currently required by at least one protocol, the punted-to-control-plane bandwidth rate value currently required by the at least one protocol being obtained from current status information of the at least one protocol; and
assigning a bandwidth for the at least one protocol in accordance with the punted-to-control-plane bandwidth rate value currently required by the at least one protocol.

2. The method according to claim 1, wherein assigning a bandwidth for the at least one protocol in accordance with the punted-to-control-plane bandwidth rate value currently required by the at least one protocol specifically comprises:
updating a parameter value of committed access rate, CAR, to which the at least one protocol corresponds in accordance with the punted-to-control-plane bandwidth rate value currently required by the at least one protocol; and
assigning the bandwidth for the at least one protocol in accordance with the updated parameter value of CAR.

3. The method according to claim 1 or 2, wherein the current status information of the at least one protocol comprises at least one of: the number of peers, a size of a protocol package, and a punted-to-control-plane time interval of a protocol package.

4. The method according to claim 2 or 3, wherein the punted-to-control-plane bandwidth rate value currently required by the at least one protocol comes from a protocol information acquiring module or a service processing module.

5. The method according to any one of claims 1 to 4, further comprising:
extracting protocol type information of a received package, and performing a corresponding CAR process on the received package in accordance with the protocol type information.

6. The method according to claim 5, wherein performing a corresponding CAR process on the received package in accordance with the protocol type information comprises: determining whether the received package is punted in accordance with the CAR parameter value of the received package.

7. A system for realizing dynamic correlation of control plane traffic rate, comprising a protocol information acquiring module and a forwarding engine module, wherein,
the protocol information acquiring module, is configured to acquire a punted-to-control-plane bandwidth rate value currently required by at least one protocol in accordance with current status information of the at least one protocol, and send the acquired punted-to-control-plane bandwidth rate value currently required by the at least one protocol to the forwarding engine module; and
the forwarding engine module, is configured to assign a bandwidth for the at least one protocol in accordance with the punted-to-control-plane bandwidth rate value currently required by the at least one protocol.

8. The system according to claim 7, further comprising a service processing module; wherein
the protocol information acquiring module is configured to acquire a punted-to-control-plane bandwidth rate value currently required by at least one protocol in accordance with current status information of the at least one protocol, and send the acquired punted-to-control-plane bandwidth rate value currently required by the at least one protocol to the forwarding engine module via the service processing module; and
the service processing module, is configured to receive the punted-to-control-plane bandwidth rate value of the at least one protocol acquired by the protocol information acquiring module, and send the punted-to-control-plane bandwidth rate value of the at least one protocol to the forwarding engine module.
